# FASCICULE DE BREVET EUROPEEN

(11) **EP 3 474 492 B1**
(45) Date de publication et mention de la délivrance du brevet: **24.06.2020**
(21) Numéro de dépôt: 18201001.7
(22) Date de dépôt: 17.10.2018
(51) Int. Cl.: H04L 12/24, H04L 29/08

(54) **SYSTÈME DE GESTION DISTRIBUÉE POUR UN RÉSEAU DE COMMUNICATION COMPORTANT UNE PLURALITÉ DE FONCTIONS RÉSEAU VIRTUALISÉES**
VERTEILTES VERWALTUNGSSYSTEM FÜR EIN KOMMUNIKATIONSNETZ, DAS EINE VIELFALT VON VIRTUALISIERTEN NETZFUNKTIONEN UMFASST
DISTRIBUTED MANAGEMENT SYSTEM FOR A COMMUNICATION NETWORK HAVING A PLURALITY OF VIRTUALISED NETWORK FUNCTIONS

(30) Priorité: 17.10.2017 FR 1701081
(43) Date de publication de la demande: 24.04.2019
(73) Titulaire: Thales, 92400 Courbevoie (FR); Institut Mines Telecom, 75014 Paris (FR)
(72) Inventeur: WION, Adrien, 92622 GENNEVILLIERS CEDEX (FR); BOUET, Mathieu, 92622 GENNEVILLIERS (FR); CONAN, Vania, 92622 GENNEVILLIERS CEDEX (FR); IANNONE, Luigi, 75214 PARIS CEDEX 13 (FR)
(74) Mandataire: Lavoix

(56) Documents cités:
- WO-A1-2016/180464
- FR-A1- 3 019 432
- US-A1- 2017 104 847
- Shuaib Siddiqui ET AL: "Converged Heterogeneous Advanced 5G Cloud-RAN Architecture for Intelligent and Secure Media Access - Delivrable 3.2 - Initial 5G multi-provider v-security realization: Orchestration and Management", Deliverables of the Horizon 2020 Framework Programme of the European Union, H2020-ICT-2014-1, Advanced 5G Network Infrastructure for the Future Internet, Project no. 671704, 30 juin 2016 (2016-06-30), pages 1-145, XP055428392, Extrait de l'Internet: URL:http://www.charisma5g.eu/wp-content/up loads/2015/08/CHARISMA-D3.2_v1.0.pdf [extrait le 2017-11-23]

## Description

La présente invention concerne la gestion des réseaux de communication.

Un réseau de communication est constitué d'une pluralité de machines connectées entre elles par des liens de communication.

Les machines possèdent une fonction de base, par exemple de serveur, de routeur, de commutateur...

Les machines d'un réseau peuvent avoir, en plus d'une fonction de base, différentes fonctions réseau de traitement de paquets de données.

On connait par exemple les fonctions réseau de pare-feu (« firewall »), de chiffreur, de système de détection d'intrusion ou IDS («Intrusion Détection Systems »), de sonde d'inspection de paquets en profondeur ou DPI (« Deep Paquet Inspection »), etc.

De plus, a été développée la notion de chaîne de fonctions réseau, consistant en une liste ordonnée de fonctions réseau indiquant les traitements successifs qui doivent être appliqués à un paquet de données. Par exemple, un paquet est introduit sur le réseau via une passerelle qui est configurée pour ajouter à l'entête de ce paquet un champ NSH (« Network Service Header ») comportant un identifiant de la chaine de fonctions réseau que doit suivre ce paquet avant d'être acheminé vers son destinataire. L'insertion d'une nouvelle fonction réseau dans une chaine de fonctions réseau consiste simplement à changer l'identifiant d'étiquetage du paquet à l'entrée sur le réseau.

Il s'agit alors de router le paquet vers une première machine offrant la première fonction réseau de la chaîne, puis une fois le paquet traité par la première machine, d'acheminer le paquet vers une seconde machine offrant la seconde fonction réseau (la seconde fonction réseau pouvant résider sur la même machine que la première fonction), etc.

Alors que les fonctions réseaux étaient autrefois fournies sous forme matérielle (« hardware »), la virtualisation ou NFV (pour « Network Functions Virtualization ») consiste à fournir ces fonctions réseau sous forme logicielle (« software »).

Une telle fonction réseau logicielle est dénommée fonction réseau virtuelle ou VNF pour « Virtual Network Function ».

Une machine offrant une telle fonction réseau virtuelle constitue ce que l'on appelle un point de présence sur le réseau ou PoP (pour « Point Of Presence » en anglais).

Un point de présence constitue, vue depuis le réseau de communication, une unique unité. Il peut donc être implémenté par une seule machine physique ou par un groupe de machines physiques connectées entre elles mais possédant des points de connexion communs avec le réseau. Ainsi un PoP peut par exemple être un simple serveur, un routeur sophistiqué ou un centre informatique (« datacenter »). Un PoP est en fait une unité connectée au réseau et disposant d'une capacité de calcul pour exécuter les programmes d'ordinateur correspondant aux fonctions réseau virtuelles.

En virtualisant les fonctions réseau, des machines banalisées peuvent être utilisées. Cela permet de réduire les dépenses d'investissement et d'exploitation tout en ayant l'avantage d'une plus grande flexibilité.

La question de la gestion et de l'orchestration des fonctions réseaux ainsi virtualisées ou VNFs est actuellement résolue en ajoutant au réseau un serveur central dédié ou serveur MANO (« Management and Orchestration »).

Les caractéristiques d'un service MANO pour les VNFs ont été spécifiées par le groupe « Network Functions Virtualization » de l'ETSI (ETSI ISG MANO) dans les documents « ETSI GS NFV-MAN 001 V1.1.1 (2014-12) » et « ETSI GS NFV-IFA 009 V1.1.1 (2016-07) ».

Le serveur MANO est notamment en charge de décider sur quel PoP du réseau lancer l'exécution d'une nouvelle instance d'une VNF, comment dimensionner une instance en cours d'exécution, et s'il convient d'arrêter l'exécution d'une instance.

Le serveur MANO maintient une vision de l'ensemble des instances des VNFs et indique à chaque machine du réseau comment chainer les fonctions réseau, tout en optimisant l'utilisation des ressources de l'infrastructure.

Cependant, la centralisation du service de gestion et d'orchestration présente deux principaux inconvénients :
- Le serveur MANO est un point unique de panne ou une cible d'attaques informatiques, ce qui pose des problèmes en termes de résilience du réseau ;
- une telle architecture centralisée ne supporte pas le partitionnement du réseau : du fait de pannes, d'attaques ou en cas de maintenance, le réseau peut être amené à être partitionné, par exemple en deux sous-réseaux. Si le serveur MANO se trouve sur le premier sous-réseau, les PoPs se trouvant sur le second sous-réseau ont perdu leur connectivité avec le serveur MANO et ne peuvent plus fonctionner correctement.

Par ailleurs, on connaît le document US2017/104847 A1 qui présente l'orchestration de fonctions virtuelles exécutées par des machines physiques réparties à travers différents sous-réseaux d'une infrastructure générale. Chaque sous-réseau étant équipé d'un orchestrateur, ce document propose une manière de faire fonctionner les différents orchestrateurs pour que l'infrastructure puisse réaliser efficacement des traitements définis par une chaîne de fonctions virtuelles.

On connaît également l'article SIDDIQUI ET AL "Converged Heterogeneous Advanced 5G Cloud-RAN Architecture for Intelligent and Secure Media Access - Delivrable 3.2 - Initial 5G multi-provider v-security realization: Orchestration and Management", Deliverables of the Horizon 2020 Framework Programme of the European Union, H2020-ICT-2014-1, Advanced 5G Network Infrastructure for the Future Internet, Project no. 671704, 30 juin 2016 (2016-06-30), pages 1-145, qui est relatif à un logiciel orchestrateur de sécurisation d'une infrastructure 5G.

L'invention a donc pour but de pallier ce problème.

Pour cela l'invention a pour objet un système de gestion distribuée pour un réseau de communication comportant une pluralité de fonctions réseau virtuelles, le réseau de communication comportant une pluralité de machines connectées par une pluralité de liaisons, la pluralité de fonction réseau virtuelles étant exécutée par une pluralité de machines dites points de présences, une couche logicielle de chaque point de présence comportant : un module de routage connecté entre au moins un port physique et au moins un port interne du point de présence, le port physique étant connecté au réseau de communication, pour le routage des paquets à partir d'une table de routage étendue stockée par le point de présence, le module de routage étant propre à échanger des informations de routage avec les autres machines du réseau de communication ; un module d'aiguillage entre le port interne et une pluralité de ports d'entrée virtuels ; un module de virtualisation ; et au moins une instance d'une fonction réseau virtuelle, dont l'exécution est gérée par le module de virtualisation, un unique port d'entrée virtuel de la pluralité de ports d'entrée virtuels étant associé à ladite instance, le module d'aiguillage permettant d'aiguiller un paquet du port interne vers le port d'entrée virtuel de l'instance de la fonction réseau virtuelle pour le traitement dudit paquet, la couche logicielle comportant, en outre, un module de gestion et d'orchestration comportant : un algorithme de surveillance et de gestion, propre à collecter des informations de gestion du module de virtualisation et de la ou de chaque instance, des informations de routage du module de routage et à transmettre des informations de configuration au module d'aiguillage ; un algorithme de mise à jour de la table de routage étendue à partir des informations de gestion et des informations de routage collectées par l'algorithme de surveillance et de gestion ; un algorithme de placement et de chainage propre, en fonction de la table de routage étendue, à lancer l'exécution d'une nouvelle instance d'une fonction réseau virtuelle, et/ou à configurer une instance d'une fonction virtuelle en cours d'exécution, et/ou à interrompre l'exécution d'une instance d'une fonction virtuelle, sur le point de présence considéré.

Suivant des modes particuliers de réalisation, le système de gestion distribuée comporte une ou plusieurs des caractéristiques suivantes, prises isolément ou suivant toutes les combinaisons techniquement possibles :
- la table de routage étendu décrit un réseau étendu associé au réseau de communication, les nœuds du réseau étendu correspondant soit à des nœuds physiques soit à des nœuds virtuels, chaque nœud physique correspondant à une fonction de routage des machines du réseau de communication, chaque nœud virtuel correspondant à une fonction réseau virtuelle, et un lien du réseau étendu entre deux nœuds physiques correspond à la liaison entre les machines correspondantes du réseau de communication et un lien entre un nœud virtuel et un nœud physique correspondant à une instance de la fonction réseau virtuelle correspondant audit nœud virtuel exécutée par le point de présence correspondant audit nœud physique.
- la table de routage étendue associe à chaque lien du réseau étendu un poids, une décision de routage par le module de routage étant prise par la mise en œuvre d'un algorithme de plus court chemin utilisant la table de routage étendue.
- l'algorithme de mise à jour de la table de routage étendue est propre à calculer une métrique étendue après une mise à jour de la table de routage étendue, et à transmettre la métrique étendue au module de routage, le module de routage utilisant directement la métrique étendue pour prendre une décision de routage d'un paquet.
- le module de routage comporte un cache propre à mémoriser une décision de routage d'un paquet appartenant à un flux de données, le cache étant réinitialisé à chaque mise à jour de la métrique étendue.
- le module de gestion et d'orchestration transmet : vers l'instance, des données de configuration ; vers le module de virtualisation, des données de lancement de l'exécution d'une instance d'une fonction réseau virtuelle ou de suppression d'une instance d'une fonction réseau virtuelle en cours d'exécution ; et vers le module d'aiguillage, des règles de transmission indiquant les ports d'entrée virtuels associés aux instances en cours d'exécution, et des règles d'aiguillage de manière à adresser un paquet vers l'une ou l'autre des instances d'une même fonction réseau virtuelle.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 est une représentation d'un réseau de communication comportant un système de gestion distribuée selon l'invention constitué d'une pluralité de points de présence;
- la figure 2 est une représentation d'une topologie étendue du réseau de la figure 1 ;
- la figure 3 est une représentation schématique sous forme de blocs d'un mode de réalisation préféré d'un point de présence du système de gestion distribué selon l'invention ; et,
- la figure 4 est un chronogramme représentant différentes étapes d'un traitement possible d'un paquet de données par la machine de la figure 3.

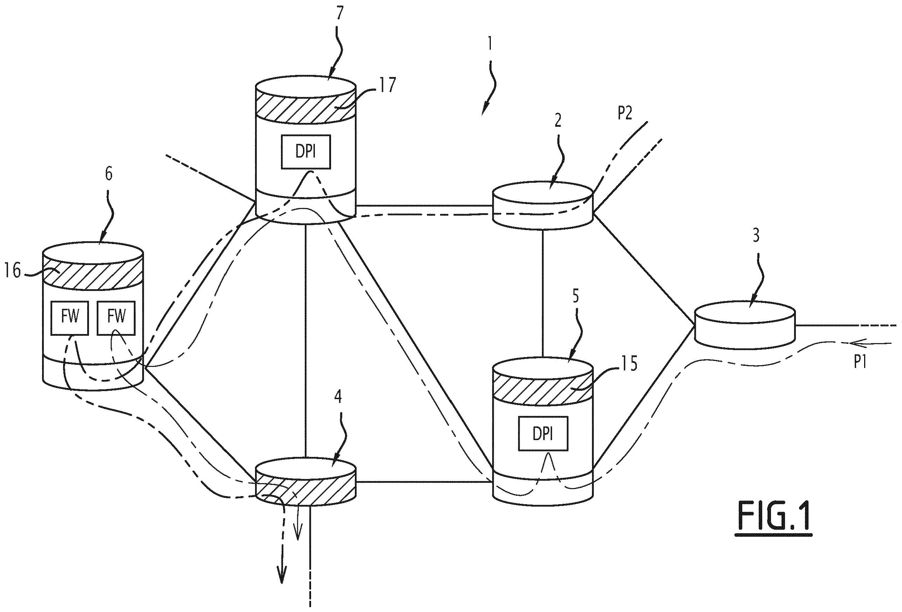

La figure 1 est une représentation d'un réseau de communication 1 équipé d'un système de gestion distribuée selon l'invention.

Le réseau 1 comporte une pluralité de machines et de liaisons de communication entre ces machines.

Certaines de ces machines sont des machines classiques offrant uniquement une fonction de base de routage. Il s'agit des machines classiques 2, 3 et 4 sur la figure 1.

Les autres machines du réseau 1 constituent des points de présence ou PoPs.

Un PoP offre, en plus d'une fonction de routage, une ou plusieurs VNF(s), c'est-à-dire des fonctions réseau qui se présentent sous forme logicielle. Il s'agit des PoPs 5, 6 et 7 sur la figure 1.

Comme indiqué en introduction, un PoP constitue, vue depuis le réseau 1, une unique machine, mais il peut être implémenté par une unique machine physique ou par un groupe de machines physiques connectées entre elles et possédant des points de connexion communs avec le réseau 1. Un PoP est en fait une unité connectée au réseau et disposant d'une capacité de calcul pour exécuter les programmes d'ordinateur correspondant aux fonctions réseau virtuelles.

Le PoP 5 offre ainsi une fonction de routage et une VNF de sonde DPI. Plus précisément, le PoP 5 exécute une instance d'une VNF de sonde DPI.

Le PoP 6 offre une fonction de routage et une VNF de pare-feu, « FW » sur les figures. Plus précisément, le PoP 6 exécute une première instance d'une VNF de pare-feu et une seconde instance de la même VNF de pare-feu.

Le PoP 7 offre une fonction de routage et une VNF de sonde DPI. Plus précisément, le PoP 7 exécute une instance d'une VNF de sonde DPI.

Selon l'invention, chaque PoP offre, en outre, un service de gestion et d'orchestration délocalisée, dit service D-MANO. Ainsi, les PoPs 5, 6 et 7 comportent chacun un module D-MANO, respectivement 15, 16 et 17, propre à réaliser le service D-MANO.

Ainsi, la solution proposée consiste à distribuer le service MANO sur chacun des PoPs du réseau. Les PoPs 5, 6 et 7 constituent donc le système de gestion distribuée selon l'invention.

Le réseau 1 ne comporte donc plus de serveur central dédié à la gestion et à l'orchestration des fonctions réseaux VNF.

Eventuellement, le réseau 1 comporte un ordinateur permettant à un opérateur du réseau de configurer initialement chacun des modules D-MANO exécutés par les PoPs.

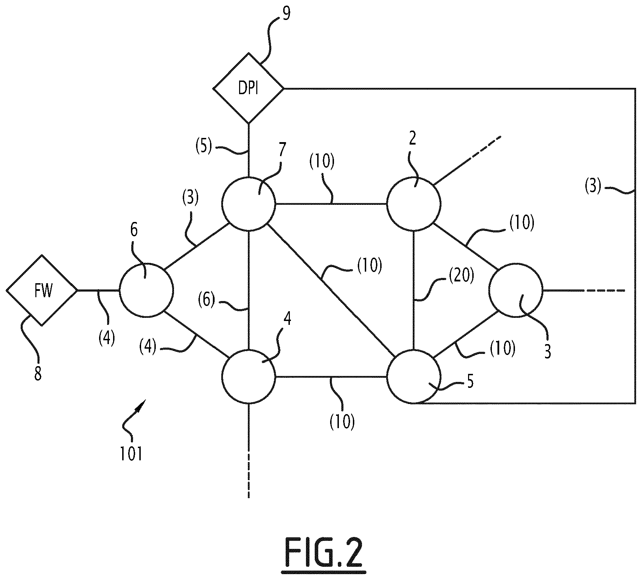

La figure 2 est une représentation de la topologie d'un réseau étendu 101 correspondant au réseau de communication 1 de la figure 1.

Chaque machine du réseau 1 est identifiée par une adresse IP. Cette adresse IP est en fait associée à la fonction de routage de cette machine. Sur la figure 2, les nœuds du réseau étendu 101 représentés par un cercle, ou nœuds physiques, correspondent à chaque fonction routeur du réseau 1. Sur la figure 2, chaque nœud est référencé par le chiffre de référence utilisé à la figure 1 pour référencer la machine correspondante sur le réseau 1.

Selon l'invention, chaque type de fonction réseau virtuelle est identifié par une adresse IP anycast unique. Différentes instances d'une même VNF sur le réseau 1 sont donc identifiées par la même adresse IP anycast. Sur la figure 2, les nœuds du réseau étendu 101 représentés par un losange, ou nœud virtuel, correspondent à chaque VNF offerte par le réseau 1, c'est-à-dire dont il existe au moins une instance en cours d'exécution sur un PoP du réseau 1. Il s'agit du nœud 8 pour la VNF de pare-feu et du nœud 9 pour la VNF de de sonde DPI.

Les liens entre les nœuds du réseau étendu 101 sont de deux types possibles. Des liens physiques pour les liens entre deux nœuds physiques, c'est-à-dire entre deux fonctions de routage. Les liens physiques correspondent donc aux liaisons physiques entre les machines du réseau 1.

Des liens virtuels pour les liens entre un nœud physique, correspondant à une fonction de routage, et un nœud virtuel, correspondant à une VNF. Un lien virtuel est établi entre un nœud physique et un nœud virtuel, lorsque le PoP dont la fonction de routage est représentée par le nœud physique exécute une instance de la VNF représentée par le nœud virtuel.

Sur la figure 2, puisque le PoP 5 exécute une instance de la VNF de sonde DPI un lien virtuel est établi entre le nœud physique 5 et le nœud virtuel 9. De même, puisque le nœud PoP 7 exécute une autre instance de la même VNF de sonde DPI, un lien virtuel est établi entre le nœud physique 7 et le nœud virtuel 9. Enfin, puisque le PoP 6 exécute une instance de la VNF de pare-feu, un lien virtuel est établi entre le nœud physique 6 et le nœud virtuel 8.

Sur chaque lien est calculé un poids de routage. Par exemple une métrique OSPF vers une IP anycast peut être utilisée. Sur la figure 2, un exemple de poids associés à chaque lien est donné, les poids étant indiqués entre parenthèse.

Les poids entre nœuds du réseau étendu 101 constitue une table de routage étendue T de description de la topologie courante du réseau étendu 101.

Par exemple, avec les poids de la figure 2, un paquet de données devant suivre une chaîne constituée d'une fonction de sonde DPI puis d'une fonction de pare-feu avant d'être transmis vers un destinataire connecté à la machine 4, sera routé, s'il est introduit sur le réseau 1 via la machine 3, vers le PoP 5 pour traitement par l'instance de la VNF de sonde DPI exécutée par le PoP 5, puis vers le PoP 7 pour simple routage, puis vers le PoP 6 pour traitement par une instance de la VNF de pare-feu exécutée par le PoP 6 (par exemple la première instance de cette VNF), et finalement vers la machine 4. Ce routage est représenté par la ligne P1 sur la figure 1.

En revanche, un paquet de données devant suivre la même chaîne de fonctions réseau avant d'être transmis vers le même destinataire connecté à la machine 4, sera routé, s'il est introduit sur le réseau 1 via la machine 2, vers le PoP 7 pour traitement par l'instance de la VNF de sonde DPI exécutée par le PoP 7, puis vers le PoP 6 pour traitement par une instance de la VNF de pare-feu exécutée par le PoP 6 (par exemple la seconde instance de cette VNF), et finalement vers la machine 4.

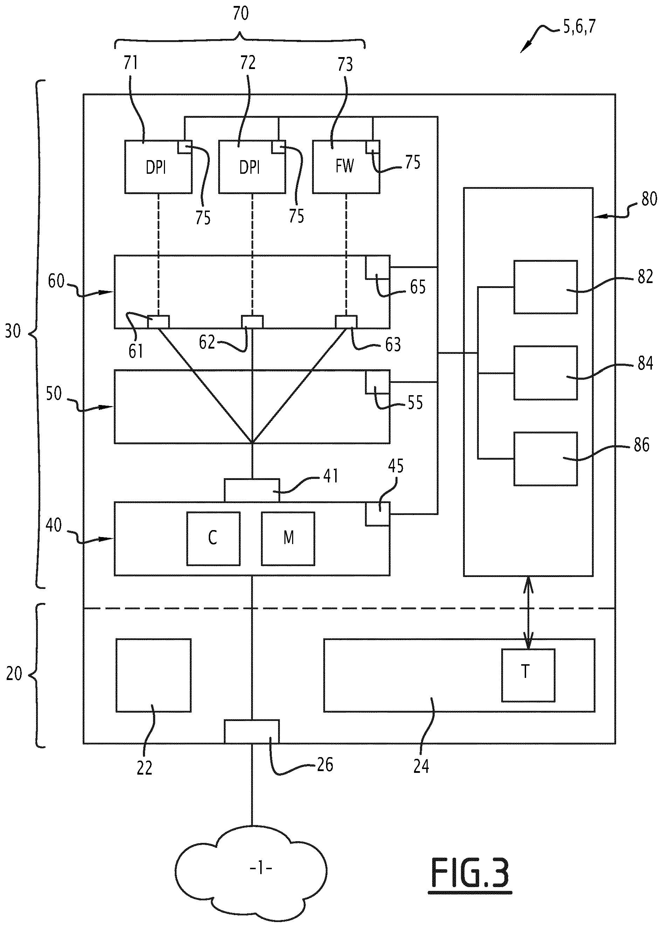

La figure 3 représente schématiquement une machine constituant un PoP selon l'invention. Le PoP 5 sera plus particulièrement présenté, mais une description identique pourrait être faite pour les PoPs 6 et 7.

Le PoP 5 est une plateforme informatique comportant une couche matérielle 20 et une couche logicielle 30.

La couche matérielle 20 comporte une unité de calcul 22, telle qu'un processeur, un espace mémoire 24 et autant d'interfaces d'entrée/sortie que de liaisons à établir avec d'autres machines du réseau de communication 1. Par exemple, sur la figure 1, l'interface du PoP 5 comporte quatre interfaces d'entrée/sortie. Cependant, pour simplifier la description, dans la suite de la présente demande, un PoP sera dit ne comportant qu'une interface d'entrée/sortie ou port physique 26.

En particulier, l'espace mémoire 24 stocke une table de routage T et les instructions de différents programmes d'ordinateur aptes à être exécutées par l'unité de calcul 22. La couche logicielle 30 est constituée par l'exécution de ces différents programmes.

Parmi ces programmes, le PoP 5 comporte un module D-MANO 80, un module de routage 40, un module d'aiguillage 50, un module de virtualisation 60 et un ensemble 70 d'instances de fonctions réseau virtuelles.

Une fonction réseau virtuelle ou VNF correspond à un type de fonction, par exemple une fonction de pare-feu, une fonction de système IDS, une fonction de sonde DPI, etc.

Une VNF est associée à un programme applicatif stocké dans l'espace mémoire des PoPs du réseau 1 susceptibles de l'exécuter au cours de leur exploitation.

L'exécution proprement dite de ce programme applicatif constitue une instance de la VNF correspondante.

A un instant donné, un PoP peut héberger aucune, une ou plusieurs instances d'une VNF donnée.

Un PoP peut également héberger des instances de plusieurs fonctions réseau différentes.

Ainsi par exemple, le PoP 5 comporte, à l'instant d'exploitation correspondant à la figure 1, une instance d'une fonction de sonde DPI. Par exemple encore, le PoP 5 comporte, à l'instant d'exploitation correspondant à la figure 3, une première instance 71 d'une fonction de sonde DPI, une seconde instance 72 de la même fonction de sonde DPI et une troisième instance 73 d'une fonction de pare-feu. Ces trois instances constituent l'ensemble 70.

Une instance d'une fonction réseau virtuelle est non seulement responsable du traitement d'un paquet de données qui lui est transmis via le module de virtualisation 60, mais doit également, une fois le paquet traité, l'étiqueter pour indiquer que le traitement a été fait et que le paquet doit maintenant être transmis vers la fonction réseau suivante indiquée dans la chaîne de fonctions que doit suivre le paquet. Par exemple, dans le cas d'un en-tête NSH, cette opération est effectuée en incrémentant un champ SI (Service Index) d'une unité.

Chaque instance comporte également un agent de surveillance et de configuration 75 propre à communiquer avec le module D-MANO 80.

Le module de virtualisation 60 est propre à lancer l'exécution d'une instance d'une VNF sur instruction du module D-MANO 80, à contrôler cette instance au cours de son exécution et à terminer l'exécution de cette instance sur instruction du module D-MANO 80.

On connait une virtualisation par hyperviseur selon laquelle le module de virtualisation est un noyau hyperviseur, qui est apte à partitionner temporellement et spatialement l'exécution de chaque instance sur l'ordinateur hôte. L'exécution de chaque instance sur une partition dédiée permet un cloisonnement entre les diverses instances. Sur chaque partition est alors exécutée une machine virtuelle réunissant non seulement l'instance de la VNF mais également un système d'exploitation adapté.

En variante, le module de virtualisation est un module de virtualisation par conteneur. Chaque conteneur renferme uniquement l'instance d'une VNF. Le module de virtualisation offre un environnement d'exécution commun aux différents conteneurs, tout en assurant une ségrégation de leur exécution.

Le module de virtualisation 60 émule un port d'entrée pour chaque instance en cours d'exécution de l'ensemble 70. Ainsi, est associé à l'instance 71 le port d'entrée virtuel 61, à la seconde instance 72 le port d'entrée virtuel 62, et à la troisième instance 73 le port d'entrée virtuel 63

Le module de virtualisation 60 comporte également un agent de surveillance et de configuration 65 propre à communiquer avec le module D-MANO 80.

Le module d'aiguillage 50 est connecté entre, d'une part, un port interne 41 du module de routage 40 et, d'autre part, les différents ports d'entrée virtuels émulés par le module de virtualisation 60.

Le module d'aiguillage 50 est propre à diriger un paquet de données soit du module de routage 40 vers une instance particulière de l'ensemble 70, soit d'une instance de cet ensemble 70 vers le module de routage 40.

Le module d'aiguillage 50 comporte également un agent de surveillance et de configuration 55 propre à communiquer avec le module D-MANO 80.

Le module de routage 40 est connecté au port physique 26 du PoP 5 pour la connexion au réseau de communication 1. Il présente un port interne 41 auquel est connecté le module d'aiguillage 50. Le module de routage 40 présente en fait autant de ports internes que de ports physiques.

Le module de routage 40 est propre à router un paquet de données incident dans un premier cas vers une fonction de routage d'une autre machine du réseau ou une VNF d'un autre PoP du réseau ou, dans un second cas, vers une VNF du PoP 5 que le module de routage 40 équipe.

Dans le cas d'une transmission vers une autre machine du réseau, le paquet de données reçu sur le port physique 26 est réémis sur le réseau depuis le port physique 26. S'il y a plusieurs ports physiques, le port physique adapté sera sélectionné par le module de routage. Dans l'autre cas, le paquet de données reçu sur le port physique 26 est réémis sur le port interne 41 à destination du module d'aiguillage 50.

Pour ce routage, le module de routage 40 utilise une métrique de routage M élaborée, par le module D-MANO 80 à partir de la table de routage étendue T stockée dans l'espace mémoire 24 du PoP 5.

Avantageusement, le module de routage 4 utilise également un cache C de mémorisation des décisions de routage prises à partir d'une même version de la métrique M. Cela permet de stabiliser le routage sur le réseau en routant de la même manière les paquets d'un même flux de données, chaque paquet comportant alors dans son en-tête un identifiant du flux auquel il appartient. Le cache C est réinitialisé à chaque mise à jour de la métrique M (qui suit la mise à jour de la table T).

Le module de routage 40 est propre à déterminer l'état des liens qui sont établis entre le PoP 5 et les machines voisines sur le réseau 1, par exemple les machines classiques 2, 3 et 4 et le PoP 7.

Le module de routage 40 est propre à transmettre sur le réseau 1 des informations de routage correspondant à la métrique de routage M qu'il utilise à l'instant courant pour le routage afin d'informer les autres machines du réseau de toute modification de sa table de routage étendue T.

Réciproquement, le module de routage 41 du PoP 5 reçoit des modules de routage des autres machines du réseau des informations de routage relatives à l'état des liens physiques et virtuels qu'entretiennent ces autres machines.

L'échange des informations de routage est réalisé en utilisant des messages de service sur le réseau 1. Un protocole OSPF, connu de l'homme du métier, peut avantageusement être utilisé.

De cette manière les machines du réseau partagent une vision commune de la topologie courante du réseau étendu 101 (c'est-à-dire de l'ensemble des fonctions réseaux matérielles et logicielles offertes par le réseau 1) et assurent un routage cohérent des paquets de données.

Le module de routage 40 comporte également un agent de surveillance et de configuration 45 propre à communiquer avec le module D-MANO 80.

Le module D-MANO 80 comporte un algorithme 82 de surveillance et de configuration, un algorithme 84 de mise à jour de la table de routage T et un algorithme 86 de placement et de chaînage.

Le module D-MANO 80 échange de manière bidirectionnelle des informations avec les agents de surveillance implantés dans chacun des modules de routage, d'aiguillage et de virtualisation, ainsi que dans chacune des instances des VNFs en cours d'exécution.

L'algorithme 82 de surveillance et de configuration permet ainsi de collecter :
- depuis une instance de l'ensemble 70, des informations de gestion de cette instance, notamment la charge de l'instance.
- depuis le module de virtualisation 60, des informations de gestion des ressources allouées aux instances, notamment la charge de l'unité de calcul pour telle ou telle instance.
- depuis le module de routage 40, des informations de routage. Il s'agit d'informations de routage relatives à l'état des liens physiques du réseau établis par le PoP avec des machines voisines et d'informations de routage relatives à l'état des liens physiques et/ou virtuels reçues via des messages de service échangés sur le réseau avec les autres machines.

L'algorithme 82 permet au module D-MANO de transmettre :
- vers une instance de l'ensemble 70 venant d'être instanciée, des données de configuration de cette instance.
- vers le module de virtualisation 60, des données de lancement de l'exécution d'une instance d'une VNF particulière ou de suppression d'une instance en cours d'exécution.
- vers le module d'aiguillage 50, des règles de transmission indiquant notamment les ports d'entrée virtuels associés aux instances en cours d'exécution, ainsi que des règles d'aiguillage de manière à adresser un paquet vers l'une ou l'autre des instances d'une même VNF. Ces règles d'aiguillage sont associées au poids de routage du lien virtuel correspondant.
- vers le module de routage 40, une métrique de routage.

L'algorithme 84 permet la mise à jour de la table de routage étendue T mémorisée par le PoP à partir des informations de routage.

Il s'agit des informations de routage obtenues par l'algorithme 82, depuis le module de routage 40.

Il s'agit également d'informations de routage relatives aux VNFs instanciées par le PoP 5 ici considéré. Ces informations de routage correspondent aux liens virtuels établis par le PoP 5 sur le réseau étendu 101. Elles sont déterminées par le module 84 à partir des informations de gestion collectées par l'algorithme 82 depuis le module de virtualisation 60 et les instances en cours d'exécution de l'ensemble 70.

Suite à une mise en à jour de la table de routage T, l'algorithme 84 calcule une métrique M mise à jour. Il transmet la métrique M mise à jour au module de routage 40, via l'algorithme 82 de surveillance et de configuration.

Lors de la réception d'un paquet incident sur le port physique 26 ou le port interne 41, le module de routage 40 prend une décision de routage à partir de l'identifiant IP du nœud du réseau étendue 101 contenu dans l'en-tête du paquet considéré.

Pour cela, le module de routage 40 utilise la métrique M pour prendre une décision de routage. Par exemple un algorithme de plus court chemin, permet, à partir de la métrique de routage M, de choisir le chemin de routage adapté.

Eventuellement et avantageusement, le module de routage 40 s'appuie sur le cache C. Il lit d'abord l'identifiant du flux auquel appartient le paquet considéré tel qu'indiqué dans l'en-tête de ce paquet. Il consulte ensuite le cache C. Si le cache contient déjà une décision de routage prise pour le routage d'un précédent paquet du même flux, la même décision est appliquée au paquet considéré. A défaut le module de routage utilise la métrique M pour prendre une décision de routage. Celle-ci sera mémorisée dans le cache C.

Le module de routage 40 route le paquet en fonction de la décision prise sur le port physique 26 ou le port interne 41.

L'algorithme 86 de placement et chaînage utilise la topologie du réseau étendue décrite par la table de routage étendue T ainsi que les informations de gestion collectées sur l'état des instances des VNFs.

L'algorithme 86 référence les différentes fonctions réseau virtuelles ainsi que les différentes chaînes de fonctions réseau virtuelles qui peuvent être proposées sur l'ensemble du réseau de communication 1. En particulier, il référence chaque chaîne de fonctions réseau par un identifiant de chaîne, qui est l'identifiant que sert à étiqueter un paquet de données afin d'indiquer la chaîne de fonctions réseau à travers laquelle il doit passer.

Il recense notamment les liens virtuels, c'est-à-dire l'état des différentes instances des VNFs sur l'ensemble des PoPs du réseau à partir de la table de routage étendue T stockée dans l'espace mémoire 24 et qui représente la topologie courante du réseau étendu 101.

L'algorithme 86 est propre à prendre une décision quant aux instances en cours d'exécution sur le PoP, en particulier, s'il convient de lancer une nouvelle instance d'un type de VNF particulier, ou de modifier la configuration d'une instance en cours d'exécution ou encore de supprimer une instance sur le PoP considérée.

Une décision de lancer une nouvelle instance d'une VNF particulière peut par exemple découler du fait que les instances similaires sur d'autres PoPs du réseau ont un coût d'accès trop important en termes de routage au sein de l'ensemble du réseau et que l'offre d'une nouvelle instance à cet endroit précis du réseau serait bénéfique, notamment lorsqu'il s'agit de réaliser telle ou telle chaîne de fonctions réseau.

Les informations locales, c'est-à-dire les informations sur l'état des instances des VNFs sur le PoP 5 vont enclencher, lorsque certaines règles sont vérifiées (par exemple lorsqu'un seuil en temps CPU allouée à une instance est franchi) la modification par l'algorithme 82 du poids sur le lien virtuel correspondant.

La table de routage étendue T est alors mise à jour par l'algorithme 84 avec ce poids de routage modifié.

La modification de la table de routage étendue T entraine la mise à jour toujours par l'algorithme 84 de la métrique M utilisée par le module de routage 40 et éventuellement la réinitialisation du cache C lorsqu'un tel cache est utilisé.

La métrique de routage M mise à jour est ensuite partagée entre machines du réseau 1. Le module de routage 40 annonce ainsi les VNFs que le PoP 5 peut proposer. Ce faisant, il indique aux autres modules de routage du réseau non seulement la présence des VNFs 71, 72 et 73, mais également le coût d'utilisation de ces VNFs (en mentionnant le poids de routage associé).

Chaque machine du réseau met alors à jour sa table de routage étendue en fonction des informations de routage ainsi reçues.

Ainsi, la modification des informations locales peut conduire à modifier le chemin emprunté par un paquet de données devant suivre une certaine chaîne de fonctions réseau, sans que ce paquet n'ait à subir de modification ou qu'une reconfiguration du réseau soit nécessaire. L'adaptation du réseau est donc transparente pour le trafic des paquets.

L'état instantané du réseau étendu est donné par la table de routage T continuellement mise à jour. La connaissance de la topologie du réseau étendu permet au module D-MANO 80 de prendre des décisions d'instanciation d'une VNF afin d'améliorer le placement des chaînes de fonctions réseaux.

On notera qu'en munissant un PoP d'un module de routage et d'un module d'aiguillage distincts l'un de l'autre, un découplage est réalisé entre le choix par un module de routage 40 d'un chemin de routage adapté sur le réseau étendu 101, c'est-à-dire le nœud physique ou virtuel vers lequel transmettre un paquet de données incident, et le choix par le module d'aiguillage 50 d'une instance d'une VNF sur le PoP que ce module d'aiguillage équipe.

Cette solution n'apporte donc pas de modification au mécanisme de routage lui-même. C'est la raison pour laquelle elle peut être déployée, éventuellement progressivement, sans modification du réseau existant, en conservant les machines existantes. Les nœuds classiques n'ont pas à être adaptés, car ils reçoivent une métrique de routage certes étendue, mais qui respecte le protocole classique d'échange de telles métriques (par exemple OSPF). Les nœuds classiques utilisent donc eux-aussi une table de routage étendue de description du réseau étendu 101.

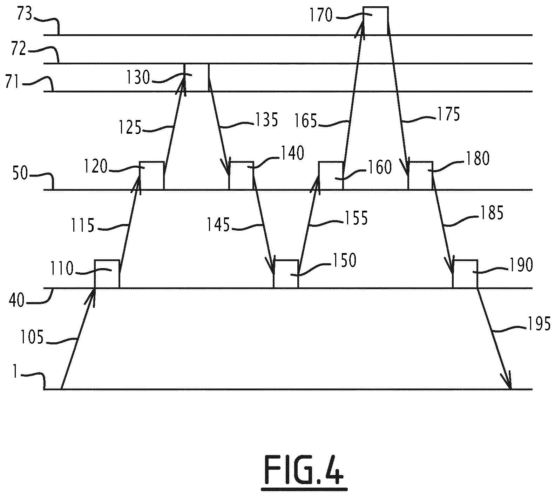

La figure 4 illustre les différentes étapes du traitement par le module d'aiguillage d'un paque incident par un PoP, tel que le PoP 5 de la figure 3.

Le module d'aiguillage 50 joue en fait le rôle de SFF (« Service Function Forwarder ») tel que décrit par l'IETF dans la RFC 7665 « Service Function Chaining (SFC) Architecture » dans sa version d'octobre 2015 ISSN: 2070-1721.

A l'étape 105, un paquet de données provenant d'une autre machine du réseau 1 est reçu par le module de routage 40 du PoP 5 considéré.

Le paquet comporte un en-tête NSH portant l'identifiant de la chaine (DPI, pare-feu) et un identifiant SI de l'avancement de son traitement le long de cette chaîne. L'identifiant SI du paquet vaut 1 indiquant qu'il doit être traité par la première fonction de la chaîne, en l'occurrence la fonction de sonde DPI.

Le paquet comporte également une adresse IP anycast correspondant à la première VNF dans la chaîne de fonctions réseau, en l'occurrence l'adresse IP anycast de la fonction de sonde DPI.

Sur la base de l'adresse IP anycast et de sa métrique de routage M, le module de routage 40 décide de router le paquet sur le port interne 41 vers le module d'aiguillage 50 (étape 110).

A l'étape 115, le paquet de données est transmis au module d'aiguillage 50.

A l'étape 120, lorsqu'un paquet arrive au module d'aiguillage 50 depuis le module de routage 40, cela signifie pour le PoP 5 que la VNF qu'il équipe est la plus adaptée pour réaliser la fonction réseau indiquée dans l'en-tête NSH.

Le module d'aiguillage 50 lit les informations de l'en-tête NSH et sélectionne, parmi les instances de la fonction de sonde DPI, la première instance 71 en cours d'exécution sur le PoP 5.

Cette sélection est effectuée selon les règles instanciées par le module D-MANO 80 dans le module d'aiguillage 50. La sélection de la première instance 71 au lieu de la seconde instance 72, qui correspondent à la même VNF (même adresse IP anycast) est par exemple le résultat de la comparaison des charges CPU de ces deux instances à l'instant courant.

A l'étape 125, le paquet de données est transmis à la première instance 71. Avantageusement, pour cette transmission, le module d'aiguillage 50 encapsule le paquet de données selon le protocole de communication requis par l'instance destinataire (VXLAN, UDP,...). Le module d'aiguillage 50 permet donc aux différentes VNFs de ne pas avoir toutes la même configuration réseau.

A l'étape 130, la première instance 71 traite le paquet de données. Elle incrémente d'une unité le champ SI de l'en-tête NSH pour indiquer que le traitement a été fait et renvoie le paquet traité vers le module d'aiguillage 50 (étape 135).

A l'étape 140, le module d'aiguillage 50 décapsule le paquet reçu. Il constate que le champ SI prend la valeur 2. Le module d'aiguillage 50 modifie alors l'entête du paquet pour que le paquet soit routé vers l'adresse IP anycast correspondant à cette seconde VNF, en l'occurrence la fonction pare-feu.

Le paquet est ensuite transmis au module de routage 40 (étape 145).

A l'étape 150, le module de routage 40 identifie, sur la base de l'adresse IP anycast destination du paquet, le PoP du réseau le plus adapté pour réaliser cette seconde fonction réseau, en l'occurrence la fonction réseau de pare-feu. Sur la base de sa métrique de routage M, le module de routage 50 décide par exemple de transmettre le paquet de nouveau sur le port interne 41 vers le module d'aiguillage 50 pour accéder à la VNF de pare-feu offerte par le PoP 5.

A l'étape 155, le paquet est transmis au module d'aiguillage 50.

A l'étape 160 le module d'aiguillage 50 lit les informations de l'en-tête NSH et sélectionne l'unique instance 73 de la VNF de pare-feu comme destinataire du paquet.

A l'étape 165, le paquet de données est transmis à la troisième instance 73. Eventuellement, pour cette transmission, le module d'aiguillage 50 encapsule le paquet de données selon le protocole de communication requis par la troisième instance 73.

A l'étape 170, la troisième instance 73 traite le paquet de données. Elle incrémente le champ SI de l'en-tête NSH pour indiquer que le traitement a été réalisé et renvoie le paquet traité vers le module d'aiguillage 50 (étape 175).

A l'étape 180, le module d'aiguillage 50 décapsule de paquet reçu. Il constate que le champ SI prend la valeur 3, qui est supérieure au nombre de fonctions dans la chaine de l'en-tête NHS du paquet. Le module d'aiguillage 50 comprend donc que le paquet a suivi l'ensemble des fonctions de la chaîne de fonctions. Il retire l'en-tête NSH et transmet le paquet traité au module de routage 40 (étape 185).

A l'étape 190, le module de routage 40 identifie le destinataire du paquet traité et l'émet, depuis le port physique 26, sur le réseau 1 (étape 195).

Avec un tel système de gestion distribuée, on évite d'avoir un serveur central de gestion et d'orchestration unique qui, en cas de dysfonctionnement ou d'attaque informatique, risque de compromettre le fonctionnement de l'ensemble du réseau.

Cette solution supporte également le partitionnement du réseau. En effet, après partitionnement, les modules D-MANO des PoPs d'un sous-réseau mettent à jour leur table de routage étendue T de manière à ce qu'elles correspondent à l'état du réseau accessible et de lancer ou suspendre l'exécution des fonctions réseaux virtuelles (VNF) adaptées au traitement des paquets de données.

La solution proposée est relativement légère à mettre en œuvre sur chaque PoP du réseau.

Elle permet une communication classique entre les PoPs et les machines classiques, de sorte qu'il n'est pas nécessaire de modifier les machines classiques. Ceci est un point important facilitant le déploiement de ces techniques de virtualisation. En effet, dans l'art antérieur, une machine classique doit posséder les informations de routage nécessaires pour adresser un paquet vers une fonction réseau quelle qu'elle soit, notamment les fonctions virtualisées. En conséquence, une machine classique doit interroger le serveur central MANO. Il doit donc être reconfiguré pour exécuter un logiciel d'interfaçage avec le serveur central MANO. Ceci n'est plus nécessaire selon l'invention, puisque les informations de routage sont échangées directement à travers la métrique de routage étendue sur le réseau.

## Revendications

1. Un système de gestion distribuée pour un réseau de communication (1) comportant une pluralité de fonctions réseau virtuelles, le réseau de communication comportant une pluralité de machines connectées par une pluralité de liaisons, la pluralité de fonction réseau virtuelles étant exécutée par une pluralité de machines dites points de présences, une couche logicielle (30) de chaque point de présence comportant :
- un module de routage (40) connecté entre au moins un port physique (26) et au moins un port interne (41) du point de présence, le port physique étant connecté au réseau de communication, pour le routage des paquets à partir d'une table de routage étendue (T) stockée par le point de présence, le module de routage étant propre à échanger des informations de routage avec les autres machines du réseau de communication ;
- un module d'aiguillage (50) entre le port interne (41) et une pluralité de ports d'entrée virtuels (61, 62, 63) ;
- un module de virtualisation (60) ; et,
- au moins une instance (71, 72, 73) d'une fonction réseau virtuelle, dont l'exécution est gérée par le module de virtualisation (60), un unique port d'entrée virtuel de la pluralité de ports d'entrée virtuels étant associé à ladite instance, le module d'aiguillage permettant d'aiguiller un paquet du port interne vers le port d'entrée virtuel de l'instance de la fonction réseau virtuelle pour le traitement dudit paquet,
la couche logicielle (30) comportant, en outre, un module de gestion et d'orchestration (80) comportant :
- un algorithme (82) de surveillance et de gestion, propre à collecter des informations de gestion du module de virtualisation (60) et de la ou chaque instance (71, 72, 73), des informations de routage du module de routage (40) et à transmettre des informations de configuration au module d'aiguillage (50) ;
- un algorithme (84) de mise à jour de la table de routage étendue (T) à partir des informations de gestion et des informations de routage collectées par l'algorithme (82) de surveillance et de gestion ;
- un algorithme (86) de placement et de chainage propre, en fonction de la table de routage étendue (T), à lancer l'exécution d'une nouvelle instance d'une fonction réseau virtuelle, et/ou à configurer une instance d'une fonction virtuelle en cours d'exécution, et/ou à interrompre l'exécution d'une instance d'une fonction virtuelle, sur le point de présence considéré.

2. Système selon la revendication 1, dans lequel la table de routage étendu (T) décrit un réseau étendu (101) associé au réseau de communication (1), les nœuds du réseau étendu correspondant soit à des nœuds physiques soit à des nœuds virtuels, chaque nœud physique correspondant à une fonction de routage des machines du réseau de communication, chaque nœud virtuel correspondant à une fonction réseau virtuelle, et un lien du réseau étendu entre deux nœuds physiques correspond à la liaison entre les machines correspondantes du réseau de communication et un lien entre un nœud virtuel et un nœud physique correspondant à une instance de la fonction réseau virtuelle correspondant audit nœud virtuel exécutée par le point de présence correspondant audit nœud physique.

3. Système selon la revendication 2, dans lequel la table de routage étendue (T) associe à chaque lien du réseau étendu un poids, une décision de routage par le module de routage étant prise par la mise en œuvre d'un algorithme de plus court chemin utilisant la table de routage étendue (T).

4. Système selon l'une quelconque des revendications précédentes, dans lequel l'algorithme (84) de mise à jour de la table de routage étendue (T) est propre à calculer une métrique étendue (M) après une mise à jour de la table de routage étendue (T), et à transmettre la métrique étendue (M) au module de routage (4), le module de routage (40) utilisant directement la métrique étendue (M) pour prendre une décision de routage d'un paquet.

5. Système selon la revendication 4, dans lequel le module de routage (40) comporte un cache (C) propre à mémoriser une décision de routage d'un paquet appartenant à un flux de données, le cache étant réinitialisé à chaque mise à jour de la métrique étendue (M).

6. Système selon l'une quelconque des revendications précédentes, dans lequel le module de gestion et d'orchestration (80) transmet :
- vers l'instance (71, 72, 73), des données de configuration ;
- vers le module de virtualisation (60), des données de lancement de l'exécution d'une instance d'une fonction réseau virtuelle ou de suppression d'une instance d'une fonction réseau virtuelle en cours d'exécution ; et,
- vers le module d'aiguillage (50), des règles de transmission indiquant les ports d'entrée virtuels associés aux instances en cours d'exécution, et des règles d'aiguillage de manière à adresser un paquet vers l'une ou l'autre des instances d'une même fonction réseau virtuelle.

## Patentansprüche

1. Verteiltes Verwaltungssystem für ein Kommunikationsnetz (1), das eine Mehrzahl von virtuellen Netzfunktionen aufweist, wobei das Kommunikationsnetz eine Mehrzahl von Maschinen aufweist, die durch eine Mehrzahl von Verbindungen verbunden sind, und die Mehrzahl von virtuellen Netzfunktionen von einer Mehrzahl von Maschinen, genannt Point of Presence, ausgeführt werden, wobei eine Softwareschicht jedes Point of Presence aufweist:
- ein Routing-Modul (40), das zwischen mindestens einem physischen Port (26) und mindestens einem internen Port (41) des Point of Presence verbunden ist, wobei der physische Port mit dem Kommunikationsnetz verbunden ist, für das Routing von Paketen aus einer ausgedehnten Routingtabelle (T), die von dem Point of Presence gespeichert ist, wobei das Routing-Modul geeignet ist, Routinginformationen mit den anderen Maschinen des Kommunikationsnetzes auszutauschen;
- ein Weichenmodul (50) zwischen dem internen Port (41) und einer Mehrzahl von virtuellen Eingangsports (61, 62, 63);
- ein Virtualisierungsmodul (60); und
- mindestens eine Instanz (71, 72, 73) einer virtuellen Netzfunktion, deren Ausführung durch das Virtualisierungsmodul (60) verwaltet wird, wobei ein einziger virtueller Eingangsport der Mehrzahl von virtuellen Eingangsports der Instanz zugeordnet ist und das Weichenmodul ermöglicht, ein Paket vom internen Port zu dem virtuellen Port der Instanz der virtuellen Netzfunktion für die Verarbeitung des Pakets zu leiten,
wobei die Softwareschicht (30) außerdem ein Verwaltungs- und Orchestrierungsmodul (80) umfasst, das aufweist:
- einen Überwachungs- und Verwaltungsalgorithmus (82), der geeignet ist, Verwaltungsinformationen des Virtualisierungsmoduls (60) und der oder jeder Instanz (71, 72, 73), Routinginformationen des Routing-Moduls (40) zu sammeln und Konfigurationsinformationen an das Weichenmodul (50) zu senden;
- einen Aktualisierungsalgorithmus (84) für die ausgedehnte Routingtabelle (T) aus den Verwaltungsinformationen und den Routinginformationen, die von dem Überwachungs- und Verwaltungsalgorithmus (82) gesammelt wurden;
- einen Platzierungs- und Verkettungsalgorithmus, der geeignet ist, abhängig von der ausgedehnten Routingtabelle (T) die Ausführung einer neuen Instanz einer virtuellen Netzfunktion zu starten und/oder eine Instanz einer virtuellen Funktion während der Ausführung zu konfigurieren und/oder die Ausführung einer Instanz einer virtuellen Funktion an dem betrachteten Point of Presence zu unterbrechen.

2. System nach Anspruch 1, bei dem die ausgedehnte Routingtabelle (T) ein ausgedehntes Netz (101), das dem Kommunikationsnetz (1) zugeordnet ist, beschreibt, wobei die Knoten des ausgedehnten Netzes sowohl physischen Knoten als auch virtuellen Knoten entsprechen, jeder physische Knoten einer Routingfunktion der Maschinen des Kommunikationsnetzes entspricht, jeder virtuelle Knoten einer virtuellen Netzfunktion entspricht und eine Verbindung des ausgedehnten Netzes zwischen zwei physischen Knoten einer Verbindung zwischen den entsprechenden Maschinen des Kommunikationsnetzes entspricht und eine Verbindung zwischen einem virtuellen Knoten und einem physischen Knoten einer Instanz der virtuellen Netzfunktion entspricht, die dem virtuellen Knoten entspricht, die von dem Point of Presence, der dem physischen Knoten entspricht, ausgeführt wird.

3. System nach Anspruch 2, bei dem die ausgedehnte Routingtabelle (T) jeder Verbindung des ausgedehnten Netzes ein Gewicht zuordnet, wobei eine Routingentscheidung von dem Routing-Modul durch die Ausführung eines Algorithmus kürzesten Weges unter Verwendung der ausgedehnten Routingtabelle (T) getroffen wird.

4. System nach einem beliebigen der vorhergehenden Ansprüche, bei dem der Aktualisierungsalgorithmus (84) der ausgedehnten Routingtabelle (T) geeignet ist, eine ausgedehnte Metrik (M) nach der Aktualisierung der ausgedehnten Routingtabelle (T) zu berechnen und die ausgedehnte Metrik (M) dem Routing-Modul (4) zu senden, wobei das Routing-Modul (40) direkt die ausgedehnte Metrik (M) verwendet, um eine Routingentscheidung für ein Paket zu treffen.

5. System nach Anspruch 4, bei dem das Routing-Modul (40) einen Cachespeicher (C) aufweist, der geeignet ist, eine Routingentscheidung für ein Paket, das zu einem Datenstrom gehört, zu speichern, wobei der Cachespeicher bei jeder Aktualisierung der ausgedehnten Metrik (M) reinitialisiert wird.

6. System nach einem der vorhergehenden Ansprüche, bei dem das Verwaltungs- und Orchestrierungsmodul (80) sendet:
- Konfigurationsdaten an die Instanz (71, 72, 73);
- Daten für den Start der Ausführung einer Instanz einer virtuellen Netzfunktion oder für die Löschung einer Instanz einer virtuellen Netzfunktion während der Ausführung an das Virtualisierungmodul (60); und
- Übertragungsregeln an das Weichenmodul (50), die die den Instanzen während der Ausführung zugeordneten virtuellen Eingangsports und Leitungsregeln angeben, um ein Paket zu der einen oder der anderen der Instanzen einer selben virtuellen Netzfunktion zu adressieren.

## Claims

1. Distributed management system for a communication network (1) comprising a plurality of virtual network functions, wherein the communication network comprises a plurality of machines connected by a plurality of links, wherein the plurality of virtual network functions is run by a plurality of machines called points of presence, wherein a software layer (30) of each point of presence comprises:
- a routing module (40) connected between at least one physical port (26) and at least one internal port (41) of the point of presence, wherein the physical port is connected to the communication network for the routing of the packets based on an extended routing table (T) stored by the point of presence, wherein the routing module is able to exchange routing information with the other machines of the communication network;
- a switching module (50) between the internal port (41) and a plurality of virtual input ports (61, 62, 63);
- a virtualization module (60); and,
- at least one instance (71, 72, 73) of a virtual network function, the running of which is managed by the virtualization module (60), wherein a single virtual input port of the plurality of virtual input ports is associated with the said instance, wherein the routing module routes a packet from the internal port to the virtual input port of the instance of the virtual network function for processing the said packet,
the software layer (30) further comprises a management and orchestration module (80) comprising:
- a monitoring and managing algorithm (82) capable of collecting management information from the virtualization module (60) and the, or each, instance (71, 72, 73), routing information of the routing module (40) and transmitting configuration information to the routing module (50);
- an algorithm (84) for updating the extended routing table (T) from the management information and routing information collected by the monitoring and management algorithm (82);
- an algorithm (86) for placement and chaining, capable, according to the extended routing table (T), launching the running of a new instance of a virtual network function, and/or configuring an instance of a running virtual function, and/or interrupting the running of an instance of a virtual function, on the point of presence under consideration.

2. System according to claim 1, wherein the extended routing table (T) describes an extended area network (101) associated with the communication network (1), wherein the nodes of the extended area network correspond to either physical nodes or virtual nodes, wherein each physical node corresponds to a routing function of the machines of the communication network, wherein each virtual node corresponds to a virtual network function, while a link of the extended network between two physical nodes corresponds to the link between the corresponding machines of the communication network, while a link between a virtual node and a physical node corresponds to an instance of the virtual network function corresponding to the said virtual node run by the point of presence corresponding to the said physical node.

3. System according to claim 2, wherein the extended routing table (T) associates a weight with each link of the extended area network, wherein a routing decision by the routing module is taken upon the implementation of a shorter path algorithm using the extended routing table (T).

4. System according to any one of the preceding claims, wherein the algorithm (84) for updating the extended routing table (T) is designed to calculate an extended metric (M) after an update of the extended routing table (T), and to transmit the extended metric (M) to the routing module (4), wherein the routing module (40) directly uses the extended metric (M) to take a routing decision for a packet.

5. System according to claim 4, wherein the routing module (40) comprises a cache (C) for storing a routing decision of a packet belonging to a data stream, wherein the cache is reset each time the extended metric (M) is updated.

6. System according to any one of the preceding claims, in which the management and orchestration module (80) transmits:
- to the instance (71, 72, 73), configuration data;
- to the virtualization module (60), data for launching the running of an instance of a virtual network function, or deleting an instance of a virtual network function that is running; and,
- to the switching module (50), transmission rules indicating the virtual input ports associated with the instances being run, and switching rules in order to address a packet to one or other of the instances of the same virtual network function.
